(19) Europäisches Patentamt
European Patent Office
Office européen des brevets

(11) Veröffentlichungsnummer: **0 188 740**
**B1**

(12) # EUROPÄISCHE PATENTSCHRIFT

(45) Veröffentlichungstag der Patentschrift: **14.12.88**

(51) Int. Cl.⁴: **C 08 F 4/64**, C 08 F 10/02

(21) Anmeldenummer: **85115967.3**

(22) Anmeldetag: **13.12.85**

(54) **Verfahren zum Herstellen von Ethylenpolymerisaten relativ niederer Dichte mittels eines Ziegler-Katalysatorsystems.**

(30) Priorität: **21.12.84 DE 3446775**

(43) Veröffentlichungstag der Anmeldung: **30.07.86 Patentblatt 86/31**

(45) Bekanntmachung des Hinweises auf die Patenterteilung: **14.12.88 Patentblatt 88/50**

(84) Benannte Vertragsstaaten: **AT BE DE FR GB IT NL**

(56) Entgegenhaltungen:
**DE-A-2 846 185**
**US-A-2 953 552**
**US-A-4 329 255**

(73) Patentinhaber: **BASF Aktiengesellschaft, Carl-Bosch- Strasse 38, D-6700 Ludwigshafen (DE)**

(72) Erfinder: **Funk, Guido, Dr., Duererstrasse 5, D-6520 Worms 14 (DE)**
Erfinder: **Klaerner, Peter, Dr., Hauptstrasse 62, D-6719 Battenberg (DE)**
Erfinder: **Hennenberger, Peter, Dr., Am Mandelgarten 19, D-6713 Freinsheim (DE)**
Erfinder: **Schweier, Guenther, Dr., Friedrich-Pietzsch- Strasse 14, D-6701 Friedelsheim (DE)**
Erfinder: **Vogt, Heinz, Dr., Pranckhstrasse 30, D-6700 Ludwigshafen (DE)**

**EP 0 188 740 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft ein Verfahren zum Herstellen von Ethylenpolymerisaten relativ niederer Dichte durch Polymerisation von Ethylen bei Temperaturen von 20 bis 160, insbesondere 50 bis 120°C und Drücken von 1 bis 100, insbesondere 10 bis 50 bar in Gegenwart von Wasserstoff mittels eines Ziegler-Katalysatorsystems aus

(1) einer binären Titan enthaltenden Komponente aus

(1.1) einer ersten Titan enthaltenden Unterkomponente, bestehend aus einem Titansäureester der Formel

$Ti(OR^1)_4$,

worin $R^1$ steht für einen $C_1$- bis $C_{12}$-Kohlenwasserstoffrest aliphatischer und/oder aromatischer Natur, vorzugsweise für eine $C_1$- bis $C_{12}$-Alkylgruppe, und insbesondere für eine $C_1$-bis $C_9$-Alkylgruppe, sowie

(1.2) einer zweiten Titan enthaltenden Unterkomponente, die zudem Chlor enthält, und

(2) einer Aluminium enthaltenden Komponente, bestehend aus einer aluminiumorganischen Verbindung der Formel

$AlR^2_3$

worin stehen
$R^2$ für $R^3$ oder $OR^3$, insbesondere $R^3$, und
$R^3$ für eine $C_1$- bis $C_8$-, insbesondere $C_1$- bis $C_4$-Alkyl-gruppe,

mit den Maßgaben, daß das Atomverhältnis Titan aus (1) : Aluminium aus (2) 1 : 5 bis 1 : 500, insbesondere 1 : 5 bis 1 : 50 und das Verhältnis Titan aus (1.1) : Titan aus (1.2) 1 : 0,01 bis 1 : 1, insbesondere 1 : 0,02 bis 1 : 0,5 beträgt.

Polymerisationsverfahren dieser Art sind bekannt, wobei im gegebenen Zusammenhang als repräsentativ das in der US-PS-2 953 552 beschriebene gelten kann.

Die genannte Verfahrensart hat - ebenso wie in Parallele zu setzende andere Verfahrensarten - zum Kernstück eine in besonderer Weise ausgestaltete binäre Titan enthaltende Katalysatorkomponente (1).

Die besonderen Ausgestaltungen dieser binären Katalysatorkomponente (1) werden bekanntlich vorgenommen, um bestimmte Ziele zu erreichen, wie die folgenden:

(a) Katalysatorsysteme, die eine erhöhte Ausbeute an Polymerisat zu lieferm vermögen, nämlich Katalysatorsysteme mit einer erhöhten Produktivität, d. h. Systeme, bei denen die Menge an gebildetem Polymerisat pro Gewichtseinheit Titan der Katalysatorkomponente (1) erhöht ist.

(b) Katalysatorsysteme, durch die weniger Halogen in das Polymerisat eingebracht wird; - was zu erreichen ist, indem
($b_1$) die Ausbeute gemäß (a) gesteigert wird und/oder
($b_2$) Katalysatorkomponenten (1) eingesetzt werden, die kein Halogen enthalten.

(c) Katalysatorsysteme, die bei der Polymerisation von Ethylen unter Niederdruckbedingungen, d. h. nach Ziegler, ohne Zufuhr von Comonomeren, wie höheren α-Olefinen, in das Polymerisationssystem zu seitenkettenverzweigten Produkten mit abgesenkten Polymerdichten führen.

(d) Katalysatorsysteme, die es ermöglichen, bei der Polymerisation unter Einwirkung eines Molekulargewichtsreglers, wie insbesondere Wasserstoff, mit relativ geringen Mengen an Regler auszukommen; - was z. B. für die Thermodynamik der Verfahrensführung von Bedeutung sein kann.

(e) Katalysatorsysteme, die einfach und sicher herzustellen und gut handzuhaben sind; - z. B. solche, die sich in (inerten) Kohlenwasserstoff-Hilfsmedien zubereiten lassen.

(f) Katalysatorsysteme, die zu niederdichten, verzweigten Polymerisaten mit geringen in Heptan löslichen Anteilen führen; - wodurch z. B. die Klebneigung von Folien aus diesen Polymerisaten zurückgedrängt werden kann.

(g) Katalysatorsysteme, die vergleichsweise geringe Mengen an Aluminium enthaltender Komponente (2) benötigen; - wodurch sich z. B. Ablagerungen und Korrosionsschäden an Reaktorteilen vermindern lassen.

(h) Katalysatorsysteme, durch welche die morphologischen Eigenschaften der Polymerisate in bestimnter Weise beeinflußt werden, etwa im Sinne einer einheitlichen Korngröße und/oder einer Verminderung des Feinstkornanteils und/oder eines hohen Schüttgewichtes; - was für die

technische Beherrschung der Polymerisationssysteme, die Aufbereitung der Polymerisate und/oder die Verarbeitbarkeit der Polymerisate von Bedeutung sein kann.

(i) Katalysatorsysteme, die zu Polymerisaten mit möglichst geringem Eigengeruch führen.

Nach den bisherigen Erfahrungen gibt es unter den mannigfachen Zielen etliche Ziele, die man durch besondere Ausgestaltungen des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen lag auch die Aufgabenstellung, die zur vorliegenden Erfindung geführt hat: Eine neue Art binärer Titan enthaltender Katalysatorkomponente (1) aufzuzeigen, mit der man gegenüber bekannten binären Titan enthaltendenden Katalysatorkomponenten (1) - unter vergleichbarer Zielsetzung - bessere Ergebnisse erreichen kann, insbesondere was die vorgenannten Ziele (a), (b), (f) und (i) betrifft, die - in Kombination miteinander - möglichst gut erreicht werden sollen, bei zugleich gutem Erreichen auch des Zieles (c).

Es wurde gefunden, daß die gestellte Aufgabe gelöst werden kann, wenn man bei dem eingangs definierten Polymerisationsverfahren ein Ziegler-Katalysatorsystem einsetzt, in dessen binärer Titan enthaltender Komponente (1) die zweite Titan enthaltende Unterkomponente (1.2) aus einem feinteiligen Feststoff besteht, der in einer speziellen zweistufigen Verfahrensweise aus einem bestimmten anorganischen Trägerstoff, einem spezifischen Titantrichlorid, Magnesiumchlorid sowie einer ausgewählten Aluminiumkomponente, die ihrerseits besteht aus einer bestimmten Komplexverbindung aus einem spezifischen, keine Substituenten tragenden Oxacycloalkan und einer spezifischen organischen Aluminiumverbindung sowie - gegebenenfalls - zusätzlich weiterer spezifischer organischer Aluminiumverbindung als solcher, erhalten worden ist.

Gegenstand der vorliegenden Erfindung ist dementsprechend ein Verfahren zum Herstellen von Ethylenpolymerisaten relativ niederer Dichte durch Polymerisation von Ethylen bei Temperaturen von 20 bis 160, insbesondere 50 bis 120°C und Drücken von 1 bis 100, insbesondere 10 bis 50 bar in Gegenwart von Wasserstoff mittels eines Ziegler-Katalysatorsystems aus

(1) einer binären Titan enthaltenden Komponente aus

(1.1) einer ersten Titan enthaltenden Unterkomponente, bestehend aus einem Titansäureester der Formel

$$Ti(OR^1)_4,$$

worin $R^1$ steht für einen $C_1$- bis $C_{12}$-Kohlenwasserstoffrest aliphatischer und/oder aromatischer Natur, vorzugsweise für eine $C_1$- bis $C_{12}$-Alkylgruppe, und insbesondere für eine $C_1$-bis $C_9$-Alkylgruppe, sowie

(1.2) einer zweiten Titan enthaltenden Unterkomponente, die zudem Chlor enthält,

und

(2) einer Aluminium enthaltenden Komponente, bestehend aus einer aluminiumorganischen Verbindung der Formel

$$AlR^2_3$$

worin stehen
$R^2$ für $R^3$ oder $OR^3$, insbesondere $R^3$, und
$R^3$ für eine $C_1$- bis $C_8$-, insbesondere $C_1$- bis $C_4$-Alkyl-gruppe,

mit den Maßgaben, daß das Atomverhältnis Titan aus (1) : Aluminium aus (2) 1 : 5 bis 1 : 500, insbesondere 1 : 5 bis 1 : 50 und das Verhältnis Titan aus (1.1) : Titan aus (1.2) 1 : 0,01 bis 1 : 1, insbesondere 1 : 0,02 bis 1 : 0,5 beträgt.

Das erfindungsgemäße Verfahren ist dadurch gekennzeichnet, daß eine binäre Titan enthaltende Komponente (1) eingesetzt wird, deren zweite Titan enthaltende Unterkomponente (1.2) besteht aus einem feinteiligen Feststoff, der erhältlich ist, indem man

(1.2.1) zunächst

(1.2.1.1) einen feinteiligen, porösen, anorganisch-oxidischen Stoff (I), der einen Teilchendurchmesser von 1 bis 1.000, insbesondere 10 bis 400 µm, ein Porenvolumen von 0,3 bis 3, insbesondere 1 bis 2,5 $cm^3/g$ sowie eine Oberfläche von 100 bis 1.000, insbesondere 200 bis 400 $m^2/g$ besitzt und die Formel $SiO_2.aAl_2O_3$ - worin a steht für eine Zahl im Bereich von 0 bis 2, insbesondere 0 bis 0,5 - hat, und

(1.2.1.2) eine Lösung (II), wie sie sich ergibt beim Zusammenbringen von

(IIa) 100 Gew.-Teilen eines Alkohols der Formel

$R^4$ - OH,

worin steht

$R^4$ für einen gesättigten $C_1$- bis $C_8$-Kohlenwasserstoffrest, vorzugsweise einen gesättigten $C_1$- bis $C_6$-Kohlenwasserstoffrest, und insbesondere eine $C_1$- bis $C_4$-Alkylgruppe,

(IIb) 0,01 bis 6, insbesondere 0,04 bis 3,5 Gew.-Teilen (gerechnet als Titan) eines Titantrichlorids der Formel $TiCl_3 \cdot nAlCl_3$ - worin n steht für eine Zahl im Bereich von 0 bis 0,5, vorzugsweise 0,2 bis 0,4, und insbesondere 0,31 bis 0,35 -, sowie

(IIc) 0,01 bis 4, insbesondere 0,04 bis 2,5 Gew.-Teilen (gerechnet als Magnesium) Magnesiumchlorid ($MgCl_2$), miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) im Bereich von 1 : 0,01 bis 1 : 0,2 und das Gewichtsverhältnis anorganisch-oxidischer Stoff (I) : Magnesium in dem Magnesiumchlorid (IIc) im Bereich von 1 : 0,01 bis 1 : 0,25 liegt, die Dispersion (III) bei einer Temperatur, die unterhalb von 200, insbesondere unterhalb von 160°C, und oberhalb des Schmelzpunktes des verwendeten Alkohols (IIa) liegt, bis zur trockenen Konsistenz - Bildung eines festphasigen Zwischenproduktes (IV) - eindampft und

(1.2.2) dann

(1.2.2.1) das aus Stufe (1.2.1) erhaltene festphasige Zwischenprodukt (IV) und

(1.2.2.2) eine in einem inerten Kohlenwasserstoff gelöste Aluminiumkomponente (V), die neben Aluminium auch einen $C_1$- bis $C_{12}$-Kohlenwasserstoffrest, vorzugsweise eine $C_1$- bis $C_{12}$-, und insbesondere eine $C_2$- bis $C_8$-Alkylgruppe enthält,

miteinander in Berührung bringt unter Bildung einer Dispersion, - wobei das dabei als Dispergiertes resultierende festphasige Produkt (VI) die zweite Titan enthaltende Unterkomponente (1.2) ist -,

mit der Maßgabe, daß in Stufe (1.2.2) als Aluminiumkomponente (V) eine solche eingesetzt wird, die besteht

(1.2.2.2.1)

zu 25 bis 100, vorzugsweise 35 bis 100, und insbesondere 50 bis 100 Mol.-% aus einer in dem inerten Kohlenwasserstoff löslichen Komplexverbindung der Summenformel

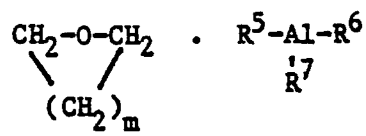

worin stehen:

m für die Zahl 2, 3 oder 4; insbesondere die Zahl 2,

$R^5$ sowie

$R^6$ für einen $C_1$- bis $C_{12}$-Kohlenwasserstoffrest, vorzugsweise eine $C_1$- bis $C_{12}$-, und insbesondere eine $C_2$- bis $C_8$-Alkylgruppe und

$R^7$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_2$- bis $C_8$-Alkylgruppe oder Chlor,

sowie

(1.2.2.2.2) zu 0 bis 75, vorzugsweise 0 bis 65, und insbesondere 0 bis 50 Mol.-% aus einer in dem inerten Kohlenwasserstoff löslichen Aluminiumverbindung der Formel

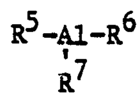

worin stehen:

$R^5$ sowie

$R^6$ für einen $C_1$- bis $C_{12}$-Kohlenwasserstoffrest, vorzugsweise eine $C_1$- bis $C_{12}$-, und insbesondere eine $C_2$- bis $C_8$-Alkylgruppe und

$R^7$ für einen $C_1$- bis $C_{12}$-Kohlenwasserstoffrest oder Chlor, vorzugsweise eine $C_1$- bis $C_{12}$-

Alkylgruppe oder Chlor, und insbesondere eine $C_2$- bis $C_8$-Alkylgruppe oder Chlor,

sowie mit den Maßgaben, daß (i) die Summe der Mol.-% unter (1.2.2.2.1) und (1.2.2.2.2) 100 beträgt und (ii) das Atomverhältnis Titan in dem festphasigen Zwischenprodukt (IV) zu Aluminium in der Aluminiumkomponente (V) im Bereich von 1 : 1 bis 1 : 30, insbesondere 1 : 2 bis 1 : 20, liegt.

Zu dem erfindungsgemäßen Verfahren ist im einzelnen das Folgende zu bemerken:

Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder kontinuierliches Verfahren, sei es z. B. als Suspensions-Polymerisationsverfahren oder Trockenphasen-Polymerisationsverfahren. Die erwähnten technologischen Ausgestaltungen - mit anderen Worten: die technologischen Varianten der Polymerisation von Ethylen in Gegenwart von Wasserstoff nach Ziegler - sind aus der Literatur und Praxis wohlbekannt, so daß sich nähere Ausführungen zu ihnen erübrigen.

Es ist indes noch festzuhalten, daß beim erfindungsgemäßen Verfahren die Komponenten des Katalysatorsystems in mannigfacher Weise in den Polymerisationsraum eingebracht werden können, z. B. (i) die erste Titan enthaltende Unterkomponente (1.1), die zweite Titan enthaltende Unterkomponente (1.2) sowie die Aluminium enthaltende Komponente (2) alle örtlich gemeinsam, (ii) die gleichen drei Komponenten alle örtlich getrennt voneinander, (iii) die erste Titan enthaltende Unterkomponente (1.1) einerseits und ein Gemisch aus der zweiten Titan enthaltenden Unterkomponente (1.2) und der Aluminium enthaltenden Komponente (2) andererseits örtlich getrennt voneinander - was insbesondere beim Trockenphasen-Polymerisationsverfahren von Vorteil sein kann - oder (iiii) ein Cemisch aus der ersten Titan enthaltenden Unterkomponente (1.1) und der zweiten Titan enthaltenden Unterkomponente (1.2) einerseits und die Aluminium enthaltende Komponente (2) andererseits örtlich getrennt voneinander.

Was die stoffliche Seite des neuen Katalysatorsystems betrifft, ist im einzelnen das folgende zu sagen:

(1) Die binäre Titan enthaltende Komponente besteht aus einer ersten Titan enthaltenden Unterkomponente (1.1) sowie einer zweiten Titan enthaltenden Unterkomponente (1.2).

(1.1) Die erste Titan enthaltende Unterkomponente ist ein Titansäureester der angegebenen Formel und kann insoweit ein bei Ziegler-Katalysatorsystemn üblicher Titansäureester sein. Unter Wahrung der oben gegebenen Rangfolge eignen sich z. B. die folgenden Individuen: Titantetramethylat, Titantetraethylat, Titantetra-n-propylat, Titantetra-isopropylat, Titantetra-n-butylat, Titantetra-n-nonylat.

Die Titansäureester können eingesetzt werden als Einzelindividuen oder in Form von Gemischen aus zwei oder mehr Einzelindividuen.

(1.2) Die zweite Titan enthaltende Unterkomponente besteht aus einem feinteiligen Feststoff, der in einer speziellen zweistufigen Verfahrensweise aus einem bestimmten anorganischen Trägerstoff, einem spezifischen Titantrichlorid, Magnesiumchlorid sowie einer ausgewählten Aluminiumkomponente erhalten worden ist.

Hierbei wird der in Stufe (1.2.1) einzusetzende anorganisch -oxidische Stoff (I) im allgemeinen ein Alumosilikat oder - insbesondere - ein Siliciumdioxid sein; wichtig ist, daß der Stoff die geforderten Eigenschaften besitzt und möglichst trocken ist. Besonders gut geeignete anorganisch-oxidische Stoffe sind solche, die gemäß der ersten Stufe (1) des in der GB-PS-1 550 951 beschriebenen Verfahrens erhalten werden, insbesondere dann, wenn dabei von Hydrogelen ausgegangen wird, die nach dem in der GB-PS-1 368 711 beschriebenen Verfahren erhalten werden. Die einzusetzenden Alkohole (IIa) können z. B. sein: Methanol, Ethanol, Isopropanol, n-Propanol, eines der drei isomeren Butanole oder ein Hexanol, wie n-Hexanol. Die Alkohole (IIa) können eingesetzt werden in Form von Einzelindividuen sowie Gemischen aus zwei oder mehr Einzelindividuen.

Das einzusetzende Titantrichlorid (IIb) kann ein bei Ziegler-Katalysatorsystemen übliches sein, z. B. ein bei der Reduktion von Titantetrachlorid mittels Wasserstoff, Aluminium oder aluminiumorganischen Verbindungen erhaltenes Reaktionsprodukt. Als besonders gut geeignet haben sich erwiesen Trichloride der Formel $TiCl_3$, wie sie bei der Reduktion von Titantetrachlorid mittels Wasserstoff anfallen sowie Trichloride der Formel $TiCl_3 \cdot \frac{1}{3} AlCl_3$, wie sie bei der Reduktion von Titantetrachlorid mittels metallischem Aluminium anfallen. Die Titantrichloride können eingesetzt werden in Form von Einzelindividuen sowie Gemischen aus zwei oder mehr Einzelindividuen.

Die ebenfalls in Stufe (1.2.1) einzusetzende Magnesiumverbindung (IIc) ist Magnesiumchlorid ($MgCl_2$).

Die in Stufe (1.2.2) einzusetzende Aluminiumkomponente (V) besteht

(1.2.2.2.1) zu 25 bis 100, vorzugsweise 35 bis 100, und insbesondere 50 bis 100 Mol.-% aus einer in dem inerten Kohlenwasserstoff löslichen Komplexverbindung der Summenformel

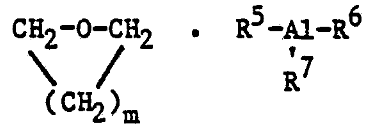

worin stehen:
m für die Zahl 2, 3 oder 4; insbesondere die Zahl 2,
$R^5$ sowie
$R^6$ für einen $C_1$- bis $C_{12}$-Kohlenwasserstoffrest, vorzugsweise eine $C_1$- bis $C_{12}$-, und insbesondere eine $C_2$- bis $C_8$-Alkylgruppe und
$R^7$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_2$- bis $C_8$-Alkyl-gruppe oder Chlor,
sowie

(1.2.2.2.2) zu 0 bis 75, vorzugsweise 0 bis 65, und insbesondere 0 bis 50 Mol.-% aus einer in dem inerten Kohlenwasserstoff löslichen Aluminiumverbindung der Formel

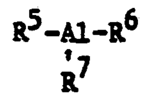

worin stehen:
$R^5$ sowie
$R^6$ für einen $C_1$- bis $C_{12}$-Kohlenwasserstoffrest, vorzugsweise eine $C_1$- bis $C_{12}$-, und insbesondere eine $C_2$- bis $C_8$-Alkylgruppe und
$R^7$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_2$- bis $C_8$-Alkylgruppe oder Chlor,

mit der Maßgabe, daß die Summe der Mol.-% unter (1.2.2.2.1) und (1.2.2.2.2) 100 beträgt.
Bei den Komplexverbindungen eignen sich die folgenden Aufbaupartner:

(i) Seitens des Oxacycloalkan-Teils vor allem Tetrahydrofuran sowie auch Tetrahydropyran und Oxepan.
Die Oxacycloalkane können vorliegen in Form von Einzelindividuen sowie Gemischen aus zwei oder den drei Einzelindividuen.

(ii) Seitens des aluminiumorganischen Teils z. B. vor allem Diethylaluminiumchlorid sowie auch Triethylaluminium und Triisobutylaluminium.
Auch diese Aufbaupartner können vorliegen in Form von Einzelindividuen sowie Gemischen aus zwei oder mehr Einzelindividuen.
Die Komplexverbindungen als solche sind ihrer Art nach bekannt; eine gut geeignete Methode zu ihrer Herstellung ist z. B. gegeben durch E.B. Baker und H.H. Sisler in Am.Soc. 75, 4828 (1953).
Der als Hilfsmedium dienende inerte Kohlenwasserstoff kann ein Kohlenwasserstoff der Art sein, die üblicherweise mit Titankomponenten für Katalysatorsysteme des Ziegler-Typs ohne Schaden für das Katalysatorsystem bzw. dessen Titan enthaltender Komponente zusammengebracht wird; - z. B. bei der Polymerisation von Ethylen. Als Beispiele für geeignete Kohlenwasserstoffe seien genannt: Pentane, Hexane, Heptane, Benzine und Cyclohexan.

(2) Als Aluminium enthaltende Komponente des erfindungsgemäß einzusetzenden Ziegler-Katalysatorsystems kommen die einschlägig üblichen, der oben gegebenen Formel gehorchenden in Betracht; sie sind aus Literatur und Praxis so wohlbekannt, daß auf sie nicht näher eingegangen zu werden braucht. Als herausragende Vertreter seien beispielsweise genannt Triethylaluminium, Tri-isobutylaluminium und Tri-n-butylaluminium.

Die Herstellung der für die vorliegende Erfindung kennzeichnenden zweiten Titan enthaltenden Unterkomponente (1.2) des Katalysatorsystems aus ihren Ausgangsstoffen bzw. Zwischenprodukten ist einfach und für den Fachmann ohne nähere Erläuterungen - die indessen sinngemäß etwa in der GB-PS-1 601 418 zu finden wären - möglich; er wird selbstverständlich beachten, daß sich dabei - wie beim Umgang mit Titan IV- und Titan III-Katalysatorkomponenten üblich - ein strenger Ausschluß von Sauerstoff und Feuchtigkeit empfiehlt.

Von Interesse für die Herstellung der Unterkomponente (1.2) mag noch das Folgende sein:
Sofern die in Stufe (1.2.2) einzusetzende Aluminiumkomponente (V) nicht nur aus (1.2.2.2.1) der oben definierten löslichen Komplexverbindung

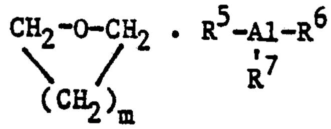

sondern auch zusätzlich (1.2.2.2.2) der oben definierten löslichen Aluminiumverbindung

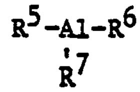

als solcher besteht, kann man das aus Stufe (1.2.1) erhaltene Zwischenprodukt (IV) mit einer gemeinsamen Lösung der Komplex- sowie der Aluminiumverbindung behandeln oder - was im allgemeinen vorteilhafter ist - nacheinander zunächst mit einer Lösung der Komplexverbindung und dann mit einer Lösung der Aluminiumverbindung.

**Beispiel 1**

Herstellung der zweiten Titan enthaltenden Unterkomponente (1.2) der binären Titan enthaltenden Komponente (1) für das Ziegler-Katalysatorsystem.

(1.2.1) Zunächst verfährt man in einer ersten Stufe so, daß man

(1.2.1.1) einen feinteiligen, porösen, anorganisch-oxidischen Stoff (I), der einen Teilchendurchmesser von 100 bis 300 µm, ein Porenvolumen von 1,9 $cm^3/g$ sowie eine Oberfläche von 280 $m^2/g$ besitzt und die Formel $SiO_2$ hat, und

(1.2.1.2) eine Lösung (II), wie sie sich ergibt beim Zusammenbringen von

(IIa) 100 Gew.-Teilen Methanol,

(IIb) 0,8 Gew.-Teilen (gerechnet als Titan) eines Titantrichlorids der Formel $TiCl_3 \cdot nAlCl_3$ - worin n steht für die Zahl 0,33 -, sowie

(IIc) 1,5 Gew.-Teilen (gerechnet als Magnesium) Magnesiumchlorid ($MgCl_2$),

unter Rühren über eine Stunde bei einer Temperatur von 40°C miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) 1 : 0,04 und das Gewichtsverhältnis anorganisch-oxidischer Stoff (I) : Magnesium in dem Magnesiumchlorid (IIc) 1 : 0,075 beträgt, und die Dispersion (III) mittels eines Rotationsverdampfers, der bis zu einem Betriebsdruck von 30 Torr und einer Betriebstemperatur von 70°C gebracht wird, bis zur trockenen Konsistenz - Bildung eines festphasigen Zwischenproduktes (IV) - eindampft.

Dieses Zwischenprodukt (IV) enthält 2,1 Gew.-% Titan.

(1.2.2) Dann verfährt man in einer zweiten Stufe so, daß man

(1.2.2.1) 100 Gew.-Teile des aus Stufe (1.2.1) erhaltenen festphasigen Zwischenprodukts (IV) und

(1.2.2.2) eine in 280 Gew.-Teilen n-Heptan gelöste Aluminiumkomponente (V), die besteht

(1.2.2.2.1) zu 100 Mol.-% aus einer (in dem n-Heptan löslichen) Komplexverbindung der Summenformel

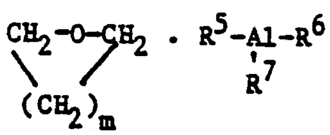

worin stehen:
m für die Zahl 2
$R^5$ sowie
$R^6$ für einen Ethylrest und
$R^7$ für Chlor,

unter Rühren über 2 Stunden bei einer Temperatur von 35°C - mit der Maßgabe, daß das Atomverhältnis

Titan in dem festphasigen Zwischenprodukt (IV) zu Aluminium in der Aluminiumkomponente (V) 1 : 7 beträgt - miteinander in Berührung bringt unter Bildung einer Dispersion, wobei das dabei als Dispergiertes resultierende festphasige Produkt (VI) die zweite Titan enthaltende Unterkomponente (1.2) ist.

Letztere wird durch Absaugen isoliert, mehrmals mit n-Heptan gewaschen und getrocknet; sie enthält 1,5 Gew.-% Titan.

Polymerisation unter Verwendung der im vorstehenden beschriebenen zweiten Titan enthaltenden Unterkomponente (1.2).

In einem 1-Liter-Autoklaven werden 400 ml n-Heptan vorgelegt, in denen 0,088 mmol Titan-n-butylat als erste Titan enthaltende Unterkomponente (1.1) sowie 2,4 mmol Tri-i-butylaluminium als Aluminium enthaltende Komponente (2) gelöst sind. Nach dem Aufpressen eines Ethylen-Wasserstoff-Gemisches, das 43 Mol Wasserstoff pro 100 Mol Ethylen (in der Gasphase über der Heptanlösung) enthält, und dem Einbringen von 0,0075 mmol (gerechnet als Titan) der zweiten Titan enthaltenden Unterkomponente (1.2) wird bei einer Temperatur von 80° C unter einem Druck von 10 bar 2 Stunden lang polymerisiert und dabei die Konzentration an monomerem Ethylen sowie an Wasserstoff im Reaktionsgemisch während der gesamten Polymerisation konstant gehalten.

Bei dieser Arbeitsweise - bei welcher das Atomverhältnis Titan aus (1), d. h. (1.1) + (1.2) : Aluminium aus (2) etwa 1 : 25 und das Verhältnis Titan aus (1.1): Titan aus (1.2) etwa 1 : 0,08 beträgt - wird nach Entfernen des Heptans mit Wasserdampf das Polymerisat mit einer Produktivität von 3.000 g pro g der zweiten Titan enthaltenden Unterkomponente (1.2) erhalten; es hat eine Dichte (nach DIN 53 479) von 0,931 g/$cm^3$ und einen [η]-Wert (nach DIN 53 728) von 1,38 dl/g.

**Beispiel 2**

Es wird gearbeitet wie in Beispiel 1, mit den einzigen zwei Ausnahmen, daß bei der Polymerisation (i) nicht 0,088 mmol sondern 0,132 mmol der ersten und (ii) nicht 0,0075 mmol sondern 0,0056 mmol der zweiten Titan enthaltenden Unterkomponente eingesetzt werden.

Bei dieser Arbeitsweise - bei welcher das Atomverhältnis Titan aus (1), d. h. (1.1) + (1.2), : Aluminium aus (2) etwa 1 : 17 und das Verhältnis Titan aus (1.1) : Titan aus (1.2) etwa 1 : 0,04 beträgt - wird nach Entfernen des Heptans mit Wasserdampf das Polymerisat mit einer Produktivität von 4.200 g pro g der zweiten Titan enthaltenden Unterkomponente (1.2) erhalten; es hat eine Dichte (nach DIN 53 479) von 0,912 g/$cm^3$ und einen [η]-Wert (nach DIN 53 728) von 1,08 dl/g.

**Beispiel 3**

Es wird gearbeitet wie in Beispiel 1, mit den einzigen drei Ausnahmen, daß bei der Polymerisation (i) 0,035 mmol Titan-i-propylat als erste Titan enthaltende Unterkomponente (1.1), (ii) nicht 0,0075 mmol sondern 0,006 mmol der zweiten Titan enthaltenden Unterkomponente (2.1), sowie (iii) 0,65 mmol Triethylaluminium als Aluminium enthaltende Komponente (2) eingesetzt werden.

Bei dieser Arbeitsweise - bei welcher das Atomverhältnis Titan aus (1), d. h. (1.1) + (1.2) : Aluminium aus (2) etwa 1 : 16 und das Verhältnis Titan aus (1.1) : Titan aus (1.2) etwa 1 : 0,18 beträgt - nach Entfernen des Heptans mit Wasserdampf wird das Polymerisat mit einer Produktivität von 4.700 g pro g der zweiten Titan enthaltenden Unterkomponente (1.2) erhalten; es hat eine Dichte (nach DIN 53 479) von 0,927 g/$cm^3$ und einen [η]-Wert (nach DIN 53 728) von 1,97 dl/g.

**Beispiel 4**

Herstellung der zweiten Titan enthaltenden Unterkomponente (1.2) der binären Titan enthaltenden Komponente (1) für das Ziegler-Katalysatorsystem.

Es wird gearbeitet wie in Beispiel 1 mit den einzigen zwei Ausnahmen, daß in der zweiten Stufe (1.2.2) (i) unter (1.2.2.2) eine Aluminiumkomponente (V) eingesetzt wird, die besteht (1.2.2.2.1) zu 50 Mol.-% aus der dort beschriebenen Komplexverbindung und (1.2.2.2.2) zu 50 Mol.-% aus Diethylaluminiumchlorid, und (ii) das Atomverhältnis Titan in dem festphasigen Zwischenprodukt (IV) zu Aluminium in der Aluminiumkomponente (V) 1 : 14 beträgt.

Polymerisation unter Verwendung der im vorstehenden beschriebenen zweiten Titan enthaltenden Unterkomponente (1.2).

Die Polymerisation erfolgt wie in Beispiel 1, jedoch unter Ersatz der dort beschriebenen zweiten Titan enthaltenden Unterkomponente (1.2) durch die gleiche Menge (gerechnet als Titan) der hier beschriebenen zweiten Titan enthaltenden Unterkomponente (1.2).

Bei dieser Arbeitsweise - bei welcher das Atomverhältnis Titan aus (1), d. h. (1.1) + (1.2) : Aluminium aus (2)

etwa 1 : 25 und das Verhältnis Titan aus (1.1) : Titan aus (1.2) etwa 1 : 0,08 beträgt - wird nach Entfernen des Heptans mit Wasserdampf das Polymerisat mit einer Produktivität von 5.100 g pro g der zweiten Titan enthaltenden Unterkomponente (1.2) erhalten; es hat eine Dichte (nach DIN 53 479) von 0,940 g/cm³ und einen [η]-Wert (nach DIN 53 728) von 1,41 dl/g.

**Patentanspruch**

Verfahren zum Herstellen von Ethylenpolymerisaten relativ niederer Dichte durch Polymerisation von Ethylen bei Temperaturen von 20 bis 160°C und Drücken von 1 bis 100 bar in Gegenwart von Wasserstoff mittels eines Ziegler-Katalysatorsystems aus

(1) einer binären Titan enthaltenden Komponente aus

(1.1) einer ersten Titan enthaltenden Unterkomponente, bestehend aus einem Titansäureester der Formel

$Ti(OR^1)_4$,

worin $R^1$ steht für einen $C_1$- bis $C_{12}$-Kohlenwasserstoffrest aliphatischer und/oder aromatischer Natur, sowie

(1.2) einer zweiten Titan enthaltenden Unterkomponente, die zudem Chlor enthält,

und

(2) einer Aluminium enthaltenden Komponente, bestehend aus einer aluminiumorganischen Verbindung der Formel

$AlR^2_3$

worin stehen
$R^2$ für $R^3$ oder $OR^3$ und
$R^3$ für eine $C_1$- bis $C_8$-Alkylgruppe,

mit den Maßgaben, daß das Atomverhältnis Titan aus (1) : Aluminium aus (2) 1 : 5 bis 1 : 500 und das Verhältnis Titan aus (1.1) : Titan aus (1.2) 1 : 0,01 bis 1 : 1 beträgt,
dadurch gekennzeichnet, daß eine binäre Titan enthaltende Komponente (I) eingesetzt wird, deren zweite Titan enthaltende Unterkomponente (1.2) besteht aus einem feinteiligen Feststoff, der erhältlich ist, indem man

(1.2.1) zunächst

(1.2.1.1) einen feinteiligen, porösen, anorganisch-oxidischen Stoff (I), der einen Teilchendurchmesser von 1 bis 1.000 µm, ein Porenvolunen von 0,3 bis 3 cm³/g sowie eine Oberfläche von 100 bis 1.000 m²/g besitzt und die Formel $SiO_2 \cdot aAl_2O_3$ - worin a steht für eine Zahl im Bereich von 0 bis 2 - hat, und

(1.2.1.2) eine Lösung (II), wie sie sich ergibt beim Zusammenbringen von

(IIa) 100 Gew.-Teilen eines Alkohols der Formel

$R^4 - OH$,

worin steht
$R^4$ für einen gesättigten $C_1$- bis $C_8$-Kohlenwasserstoffrest,

(IIb) 0,01 bis 6 Gew.-Teilen (gerechnet als Titan) eines Titantrichlorids der Formel $TiCl_3 \cdot nAlCl_3$ - worin n steht für eine Zahl im Bereich von 0 bis 0,5 -, sowie

(IIc) 0,01 bis 4 Gew.-Teilen (gerechnet als Magnesium) Magnesiumchlorid ($MgCl_2$),

miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) im Bereich von 1 : 0,01 bis 1 : 0,2 und das Gewichtsverhältnis anorganisch-oxidischer Stoff (I) : Magnesium in dem Magnesiumchlorid (IIc) im Bereich von 1 : 0,01 bis 1 : 0,25 liegt, die Dispersion (III) bei einer Temperatur, die unterhalb von 200°C, und oberhalb des Schmelzpunktes des verwendeten Alkohols (IIa) liegt, bis zur trockenen Konsistenz - Bildung eines festphasigen Zwischenproduktes (IV) - eindampft und

(1.2.2) dann

(1.2.2.1) das aus Stufe (1.2.1) erhaltene festphasige Zwischenprodukt (IV) und

(1.2.2.2) eine in einem inerten Kohlenwasserstoff gelöste Aluminiumkomponente (V), die neben Aluminium auch einen $C_1$- bis $C_{12}$-Kohlenwasserstoffrest enthält,

miteinander in Berührung bringt unter Bildung einer Dispersion - wobei das dabei als

Dispergiertes resultierende festphasige Produkt (VI) die zweite Titan enthaltende Unterkomponente (1.2) ist -,

mit der Maßgabe, daß in Stufe (1.2.2) als Aluminiumkomponente (V) eine solche eingesetzt wird, die besteht

(1.2.2.2.1) zu 25 bis 100 Mol.-% aus einer in dem inerten Kohlenwasserstoff löslichen Komplexverbindung der Summenformel

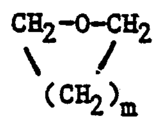 • 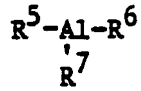

worin stehen:
m für die Zahl 2, 3 oder 4
$R^5$ sowie
$R^6$ für einen $C_1$- bis $C_{12}$-Kohlenwasserstoffrest und
$R^7$ für einen $C_1$- bis $C_{12}$-Kohlenwasserstoffrest oder Chlor
sowie

(1.2.2.2.2) zu 0 bis 75 Mol.-% aus einer in dem inerten Kohlenwasserstoff löslichen Aluminiumverbindung der Formel

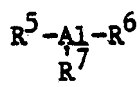

worin stehen:
$R^5$ sowie
$R^6$ für einen $C_1$- bis $C_{12}$-Kohlenwasserstoffrest und
$R^7$ für einen $C_1$- bis $C_{12}$-Kohlenwasserstoffrest oder Chlor,

sowie mit den Maßgaben, daß (i) die Summe der Mol.-% unter (1.2.2.2.1) und (1.2.2.2.2) 100 beträgt und (ii) das Atomverhältnis Titan in dem festphasigen Zwischenprodukt (IV) zu Aluminium in der Aluminiumkomponente (V) im Bereich von 1 : 1 bis 1 : 30 liegt.

## Claim

A process for the preparation of an ethylene polymer having a relatively low density by polymerization of ethylene at from 20 to 160°C and under from 1 to 100 bar in the presence of hydrogen, using a Ziegler catalyst system which comprises

(1) a binary titanium-containing component consisting of

(1.1) a first titanium-containing sub-component, consisting of a titanate of the formula

$Ti(OR^1)_4$

where $R^1$ is an aliphatic and/or aromatic $C_1$-$C_{12}$-hydrocarbon radical, and

(1.2) a second titanium-containing sub-component which furthermore contains chlorine, and

(2) an aluminum-containing component, consisting of an organoaluminum compound of the formula

$AlR^2$

where $R^2$ is $R^3$ or $OR^3$, and $R^3$ is $C_1$-$C_8$-alkyl;,

with the provisos that the atomic ratio of titanium from (1) to aluminum from (2) is from 1 : 5 to 1 : 500 and the ratio of titanium from (1.1) to titanium from (1.2) is from 1 : 0.01 to 1 : 1,

wherein a binary titanium-containing component (1) is used whose second titanium-containing sub-component (1.2) consists of a finely divided solid which is obtainable by a method in which

(1.2.1) first

(1.2.1.1) a finely divided, porous, inorganic oxidic substance (I) which has a particle diameter of from 1 to 1,000 μm, a pore volume of from 0.3 to 3 $cm^3/g$ and a specific surface area of from 100 to 1,000 $m^2/g$ and is of the formula $SiO_2 \cdot aAl_2O_3$ where a is from 0 to 2,

and

(1.2.1.2) a solution (II), as obtained by combining (IIa) 100 parts by weight of an alcohol of the formula

$$R^4\text{-}OH$$

where $R^4$ is a saturated $C_1$-$C_8$-hydrocarbon radical,

(IIb) from 0.01 to 6 parts by weight (calculated as titanium) of a titanium trichloride of the formula $TiCl_3 \cdot nAlCl_3$, where n is from 0 to 0.5, and

(IIc) from 0.01 to 4 parts by weight (calculated as magnesium) of magnesium chloride ($MgCl_2$),

are brought into contact with one another with formation of a dispersion of (III), with the proviso that the weight ratio of the inorganic oxidic substance (I) to titanium in the titanium trichloride (IIb) is from 1 : 0.01 to 1 : 0.2 and the weight ratio of the inorganic oxidic substance (I) to magnesium in the magnesium chloride (IIc) is from 1 : 0.01 to 1 : 0.25, the dispersion is evaporated to dryness at below 200°C and above the melting point of the alcohol (IIa) used, a solid-phase intermediate (IV) being formed, and

(1.2.2) then

(1.2.2.1) the solid-phase intermediate (IV) obtained from stage (1.2.1) and

(1.2.2.2) an aluminum component (V) which is dissolved in an inert hydrocarbon and contains not only aluminum but also a $C_1$-$C_{12}$-hydrocarbon radical

are brought into contact with one another with formation of a dispersion, the resulting dispersed solid-phase product (VI) being the second titanium-containing sub-component (1.2),

with the proviso that the aluminum component (V) used in stage (1.2.2) is one which consists of

(1.2.2.2.1) from 25 to 100 mol % of a complex which is soluble in the inert hydrocarbon and of the empirical formula

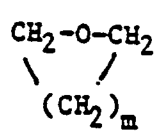 · 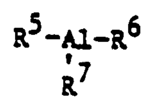

where m is 2, 3 or 4, $R^5$ and $R^6$ are each a $C_1$-$C_{12}$-hydrocarbon radical and $R^7$ is a $C_1$-$C_{12}$-hydrocarbon radical or chlorine, and

(1.2.2.2.2) from 0 to 75 mol % of an aluminum compound which is soluble in the inert hydrocarbon and of the formula

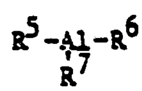

where $R^5$ and $R^6$ are each a $C_1$-$C_{12}$-hydrocarbon radical and $R^7$ is a $C_1$-$C_{12}$-hydrocarbon radical or chlorine,

and with the provisos that (i) the sum of the percentages under (1.2.2.2.1) and (1.2.2.2.2) is 100 and (ii) the atomic ratio of titanium in the solid-phase intermediate (IV) to aluminum in the aluminum component (V) is from 1 : 1 to 1: 30.

**Revendication**

Procédé de préparation de polymérisats d'éthylène de densité relativement faible par polymérisation d'éthylène à des températures de 20 à 160°C et des pressions de 1 à 100 bar, en présence d'hydrogène, au moyen d'un système catalytique de Ziegler de

(1) un composant contenant du titane binaire de

(1.1) un premier sous-composant contenant du titane, constitué d'un ester d'acide titanique de formule

$Ti(OR^1)_4$

où $R^1$ représente un reste d'hydrocarbure en $C_1$ à $C_{12}$ de nature aliphatique et/ou aromatique, ainsi que

(1.2) un second sous-composant contenant du titane qui, en outre, contient du chlore et

(2) un composant contenant de l'aluminium constitué d'un composé alumino-organique de formule

$AlR^2_3$

où
$R^2$, représente $R^3$ ou $OR^3$ et
$R^3$ un groupe alkyle en $C_1$ à $C_8$

sous réserve que le rapport atomique, titane de (1)/aluminium de (2) est 1/5 à 1/500 et le rapport titane de (1.1)/titane de (1.2) est 1/0,01 à 1/1

<u>caractérisé par le fait</u> qu'on introduit un composant du titane binaire (1) dont le second sous-composant contenant du titane (1.2) est constitué d'une matière solide finement dispersée que l'on peut obtenir

(1.2.1) d'abord en mettant en contact avec formation d'une dispersion (III),

(1.2.1.1) une matière oxydée inorganique poreuse finement dispersée (I) qui possède un diamètre de particules de 1 à 1 000 µm, un volume de pores de 0,3 à 3 $cm^3/g$ ainsi qu'une surface de 100 à 1 000 $m^2/g$ et la formule $SiO_2 \cdot aAl_2O_3$ - où <u>a</u> est un nombre compris entre 0 et 2 et

(1.2.1.2) une solution (II) telle qu'obtenue en réunissant

(IIa) 100 parties en poids d'un alcool de formule

$R^4$-OH

où
$R^4$ représente un reste d'hydrocarbure en $C_1$ à $C_8$ saturé

(IIb) 0,01 à 6 parties en poids (calculé comme titane) d'un trichlorure de titane de formule $TiCl_3 \cdot nAlCl_3$ -où <u>n</u> est un nombre de 0 à 0,5- ainsi que

(IIc) 0,01 à 4 parties en poids (calculé comme magnésium) de chlorure de magnésium ($MgCl_2$),

sous réserve que le rapport en poids, matière oxydée, inorganique (I)/titane dans le trichlorure de titane (IIb) soit compris entre 1/0,01 et 1/0,2 et que le rapport en poids, matière oxydée inorganique (I)/magnésium dans le chlorure de magnésium (IIc) soit compris entre 1/0,01 et 1/0,25,

en évaporant la dispersion (III) à une température inférieure à 200° C et supérieure au point de fusion de l'alcool utilisé (IIa) jusqu'à formation de consistence sèche d'un produit intermédiaire (IV) en phase solide, et

(1.2.2) puis en mettant en contact, avec formation d'une dispersion,

(1.2.2.1) le produit intermédiaire (IV) en phase solide obtenu à la première étape (1.2.1), et

(1.2.2.2) un composant d'aluminium (V) dissous dans un hydrocarbure inerte, qui, outre l'aluminium, contient aussi un reste d'hydrocarbure en $C_1$ à $C_{12}$,

- le produit (VI) en phase solide qui en résulte sous forme dispersée étant le second sous-composant contenant du titane (1.2)

- sous réserve qu'à l'étape (1.2.2), on introduit comme composant d'aluminium (V) un composant qui est constitué

(1.2.2.2.1) pour 25 à 100 moles % d'un composé complexe soluble dans l'hydrocarbure inerte, de formule totale

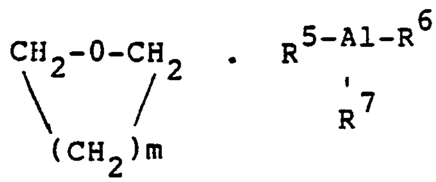

où
m est le nombre 2, 3 ou 4
$R^5$ ainsi que
$R^6$ représentent un reste d'hydrocarbure en $C_1$ à $C_{12}$, et
$R^7$ un reste d'hydrocarbure en $C_1$ a $C_{12}$ ou du chlore, ainsi que

(1.2.2.2.2) pour 0 à 75 moles % d'un composé d'aluminium soluble dans l'hydrocarbure inerte, de formule

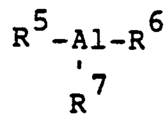

où
$R^5$ ainsi que
$R^6$ représentent un reste d'hydrocarbure en $C_1$ à $C_{12}$ et
$R^7$ un reste d'hydrocarbure en $C_1$ à $C_{12}$ ou du chlore

et sous réserve que (i) la somme de % (moles) sous (1.2.2.2.1) et (1.2.2.2.2) soit égale à 100 et (ii) que le rapport atomique titane, dans le produit intermédiaire (IV) en phase solide, par rapport à l'aluminium dans le composant d'aluminium (V), soit compris entre 1/1 et 1/30.